(19) Europäisches Patentamt
European Patent Office
Office européen des brevets

(11) **EP 4 101 306 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
**A23D 7/00** (2006.01)       **A23G 9/32** (2006.01)
**A23G 9/34** (2006.01)       **A23G 9/46** (2006.01)

(21) Application number: **21751127.8**

(52) Cooperative Patent Classification (CPC):
**A23D 7/00; A23G 9/32; A23G 9/34; A23G 9/46**

(22) Date of filing: **28.01.2021**

(86) International application number:
**PCT/JP2021/002931**

(87) International publication number:
**WO 2021/157455 (12.08.2021 Gazette 2021/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2020   JP 2020017715
21.08.2020   JP 2020139995**

(71) Applicant: **House Wellness Foods Corporation
Itami-shi Hyogo, 644-0011 (JP)**

(72) Inventor: **TOMOTAKE, Muneaki
Itami-shi, Hyogo 644-0011 (JP)**

(74) Representative: **Hoffmann Eitle
Patent- und Rechtsanwälte PartmbB
Arabellastraße 30
81925 München (DE)**

(54) **ICE CREAM-LIKE AERATED EMULSION COMPOSITION**

(57)    An object of the present invention is to provide an ice cream-like aerated emulsion composition having a soft and smooth texture unique to an ice cream. The present invention relates to an ice cream-like aerated emulsion composition containing more than 52% by mass of water, less than 23% by mass of an oil and fat, a cyclodextrin, and a water-soluble gelling agent, and being substantially protein-free.

EP 4 101 306 A1

**Description**

Technical Field

The present invention relates to an ice cream-like aerated emulsion composition that contains water, an oil and fat, a cyclodextrin, and a water-soluble gelling agent, and is substantially protein-free.

Background Art

An ice cream is a frozen sweet obtained by stirring/mixing raw materials such as milk, fresh cream, and an egg yolk, and freezing the resultant, and is popular among men and women of all ages.
On the other hand, since an ice cream contains milk and an egg, a person allergic to such a raw material cannot eat an ice cream. Therefore, an ice cream-like composition free from milk and an egg, which a person allergic to milk or an egg can eat has been developed/reported. For example, Patent Literature 1 discloses an ice cream containing an oil-in-water emulsion comprising 20 to 45% by weight of water, 4 to 40% by weight of an oil, a cyclodextrin and a sugar.
Patent Literature 2 describes an ice cream containing butter oil, palm oil, a sugar and a dextrin, but butter oil may contain milk protein, which is one of allergens, and a case of allergy thereto has been actually reported.

Citation List

Patent Literature

Patent Literature 1: Japanese Translation of PCT International Application Publication No. 2018-504131
Patent Literature 2: Japanese Patent Laid-Open No. 11-253104

Summary of Invention

Technical Problem

A conventional ice cream-like composition does not have a soft and smooth texture unique to an ice cream and is viscous or has a rough or gritty texture due to ice crystals included therein.
Therefore, an object of the present invention is to provide a novel ice cream-like composition having a soft and smooth texture unique to an ice cream.

Solution to Problem

The present inventors made earnest studies to solve the above-described problem, resulting in finding that an ice cream-like aerated emulsion composition that is substantially protein-free, and is obtained by stirring/mixing more than 52% by mass of water, less than 23% by mass of an oil and fat, a cyclodextrin, and a water-soluble gelling agent, and freezing the resultant has a soft and smooth texture unique to an ice cream, and thus, the present invention was accomplished.
The present invention is based on such novel findings, and encompasses the following inventions:

[1] An ice cream-like aerated emulsion composition, containing more than 52% by mass of water, less than 23% by mass of an oil and fat, a cyclodextrin, and a water-soluble gelling agent, and being substantially protein-free.
[2] The composition according to [1], wherein the oil and fat is one or more selected from the group consisting of canola oil, rapeseed refined oil, soybean oil, corn oil, cottonseed oil, peanut oil, sesame oil, rice oil, rice bran oil, camellia oil, safflower oil, olive oil, linseed oil, Japanese basil oil, perilla oil, sunflower oil, coconut oil (for example, palm oil, coconut oil), tea seed oil, avocado oil, kukui nut oil, grapeseed oil, cocoa butter, wheat germ oil, almond oil, evening primrose oil, castor oil, hazelnut oil, macadamia nut oil, rosehip oil, and grape oil.
[3] The composition according to [1] or [2], wherein the cyclodextrin is $\alpha$-cyclodextrin.
[4] The composition according to any one of [1] to [3], wherein the water-soluble gelling agent is one or more selected from the group consisting of carboxymethylcellulose, glucomannan, tamarind gum, xanthan gum, $\iota$ carrageenan, locust bean gum, $\lambda$ carrageenan, $\kappa$ carrageenan, gellan gum, alginate, and guar gum.
[5] A method for producing an ice cream-like aerated emulsion composition, including a step of admixing more than 52% by mass of water, less than 23% by mass of an oil and fat, a cyclodextrin, and a water-soluble gelling agent, with substantially no protein contained.

[6] A kit including an oil and fat, a cyclodextrin, and a water-soluble gelling agent for producing an ice cream-like aerated emulsion composition, wherein the composition contains water, the oil and fat, the cyclodextrin, and the water-soluble gelling agent, and is substantially protein-free.

This application is based upon and claims the benefit of priority of Japanese Patent Application Nos. 2020-017715 and 2020-139995, the entire contents of which are incorporated herein by reference.

Entire contents of publications, patents and patent applications cited herein are incorporated herein by reference.

Advantageous Effect of Invention

According to the present invention, an ice cream-like aerated emulsion composition having a soft and smooth texture unique to an ice cream can be provided.

Brief Description of Drawings

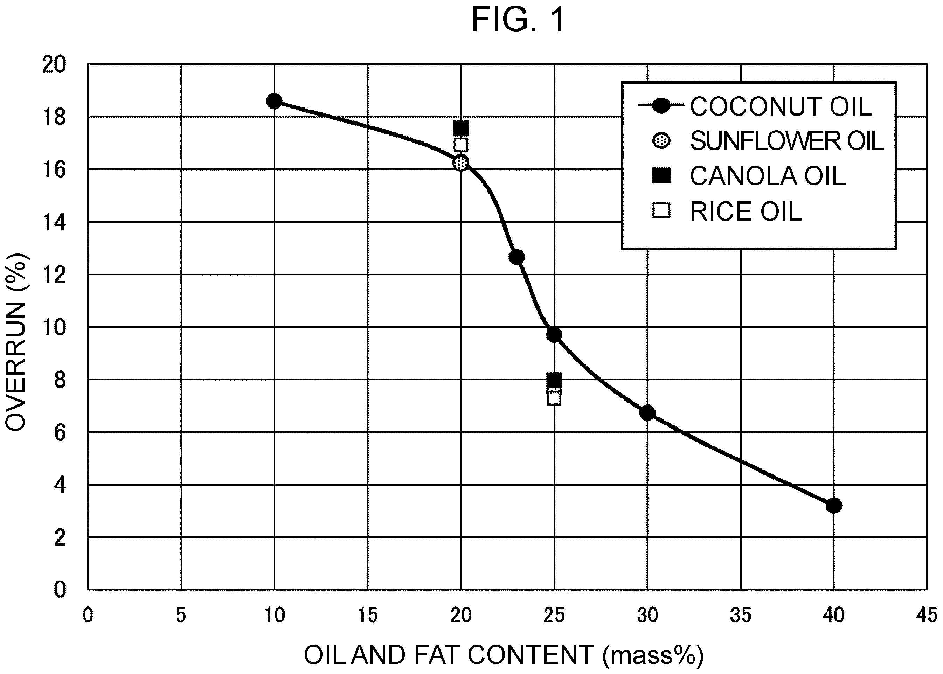

[Figure 1] Figure 1 is a graph diagram illustrating the relationship between an oil and fat content and an aeration rate (overrun (%)) of an ice cream-like aerated emulsion composition.

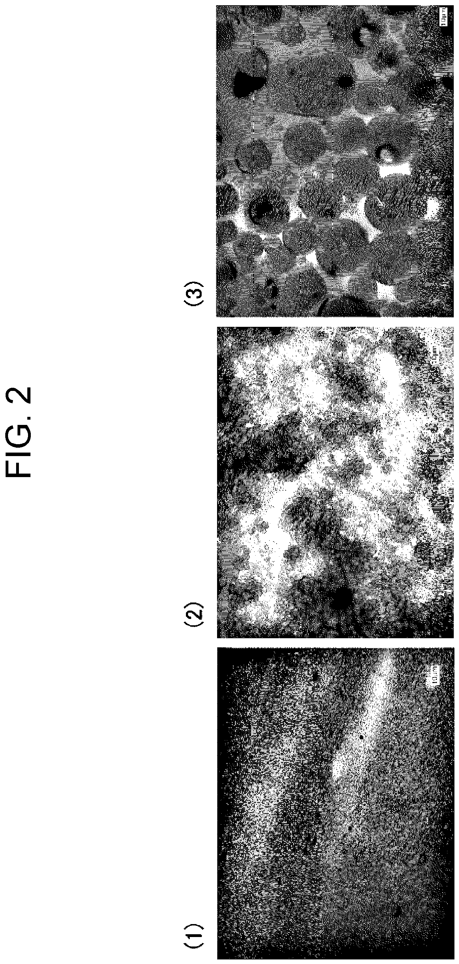

[Figure 2] Figure 2 is a photographic diagram illustrating an effect of use of both a cyclodextrin and a water-soluble gelling agent in an ice cream-like aerated emulsion composition; wherein (1) illustrates a composition in which a cyclodextrin and a water-soluble gelling agent are compounded, (2) illustrates a composition containing a cyclodextrin but not containing a water-soluble gelling agent, and (3) illustrates a composition containing a water-soluble gelling agent but not containing a cyclodextrin. Scale bar: 10 $\mu$m

Description of Embodiment

The present invention relates to an ice cream-like aerated emulsion composition that contains water, an oil and fat, a cyclodextrin, and a water-soluble gelling agent, and is substantially protein-free.

In the present invention, the term "ice cream-like aerated emulsion composition" refers to a composition that does not substantially contain, as a raw material, a protein such as milk or an egg differently from a general ice cream, is obtained by admixing/emulsifying respective raw materials of water, an oil and fat, a cyclodextrin, and a water-soluble gelling agent, and freezing the resultant, contains air in a three-dimensionally dispersed form, and is served to be eaten at 0°C or less with at least a part thereof kept in a frozen state. The ice cream-like aerated emulsion composition of the present invention has a soft and smooth good texture equivalent to or similar to that of general ice creams (including, for example, soft served ice creams, frozen milkshakes and the like).

In the present invention, the term "oil and fat" means an edible animal or vegetable oil and fat (sometimes designated as a cooking oil), and those generally used in an ice cream, particularly in lact ice or ice milk, can be used. Examples of such an oil and fat include those having a solid fat content (SFC) at 10°C of 0% to 35%, preferably 0% to 30%, and more preferably 0% to 25%. The oil and fat has an SFC at 20°C of 0% to 25%, preferably 0% to 20%, and more preferably 0% to 15%. Besides, the oil and fat preferably has a melting point of 20°C or more, 23°C or more, 25°C or more, 27°C or more, 30°C or more, or 35°C or more. The upper limit of the melting point is not especially limited, and can be, for example, 50°C or less, 45°C or less, or 40°C or less. Alternatively, the oil and fat preferably has a freezing point of 12°C or less, 6°C or less, 4°C or less, 0°C or less, -3°C or less, -5°C or less, -7°C or less, - 10°C or less, or -15°C or less. The lower limit of the freezing point is not especially limited, and can be, for example -25°C or more, or -20°C or more.

As the oil and fat usable in the present invention, edible vegetable oils and fats are preferred, and more specific examples include (but are not limited to) canola oil, rapeseed refined oil, soybean oil, corn oil, cottonseed oil, peanut oil, sesame oil, rice oil, rice bran oil, camellia oil, safflower oil, olive oil, linseed oil, Japanese basil oil, perilla oil, sunflower oil, coconut oil (such as palm oil or coconut oil), tea seed oil, avocado oil, kukui nut oil, grapeseed oil, cocoa butter, wheat germ oil, almond oil, evening primrose oil, castor oil, hazelnut oil, macadamia nut oil, rosehip oil, and grape oil. Besides, as an edible animal oil and fat, those not containing allergens (such as one or more substances selected from 7 specified ingredients, and 21 items equivalent to specified ingredients) or those from which the allergens have been removed are preferred. One of these oils and fats may be singly used, or a combination of different oils and fats may be used.

The ice cream-like aerated emulsion composition of the present invention can contain the oil and fat in an amount of less than 23% by mass, preferably 22% by mass or less, more preferably 20% by mass or less, further preferably 18% by mass or less, particularly preferably 16% by mass or less, for example, 14% by mass or less, 12% by mass or less, or 10% by mass or less. The lower limit of the amount of the oil and fat to be contained is more than 0% by mass, preferably 5% by mass or more, for example, 6% by mass or more, or 7% by mass or more, and more preferably 8% by mass or more, for example, 9% by mass or more, and further preferably 10% by mass or more. The range of the oil and fat content in the ice cream-like aerated emulsion composition of the present invention can be expressed with two numerical values selected respectively from the upper and lower limit values described above. For example, the ice cream-like aerated emulsion composition of the present invention can contain the oil and fat in an amount appropriately selected from ranges of less than 23% by mass and more than 0% by mass, less than 23% by mass and 5% by mass or more, preferably 22% by mass or less and 8% by mass or more, more preferably 20% by mass or less and 8% by mass or more, further preferably 18% by mass or less and 8% by mass or more, and particularly preferably 16% by mass or less and 10% by mass or more, for example, 14% by mass or less and 8% by mass or more, 12% by mass or less and 8% by mass or more, or 10% by mass or less and 8% by mass or more.

In the ice cream-like aerated emulsion composition of the present invention, when the amount of the oil and fat is adjusted to less than 23% by mass, a soft and smooth good texture equivalent to or similar to that of a general ice cream can be attained when the composition is frozen. On the other hand, when the amount of the oil and fat is less than 5% by mass, emulsification is insufficient, and an ice cream-like texture cannot be obtained in some cases even when the composition is frozen, and on the contrary, when the amount of the oil and fat is 23% by mass or more, the composition becomes viscous and the flavor is lost in some cases.

In the ice cream-like aerated emulsion composition of the present invention, water can be contained in an arbitrary amount with which the oil and fat is emulsified before being frozen to form an oil-in-water emulsion with another ingredient, and for example, in an amount of more than 52% by mass, preferably 54% by mass or more, for example, 55% by mass or more, 56% by mass or more, or 57% by mass or more, more preferably 58% by mass or more, for example, 60% by mass or more, and further preferably 62% by mass or more, for example, 64% by mass or more, or 66% by mass or more. The upper limit of the amount of water to be contained is not especially limited, and can be 90% by mass or less, for example, 85% by mass or less, 80% by mass or less, 75% by mass or less, or 70% by mass or less. The range of the water content in the ice cream-like aerated emulsion composition of the present invention can be expressed with two numerical values respectively selected from the upper and lower limit values described above. For example, the water content in the ice cream-like aerated emulsion composition of the present invention can be appropriately selected from ranges of more than 52% by mass and 90% by mass or less, preferably 54% by mass or more and 90% by mass or less, more preferably 58% by mass or more and 90% by mass or less, and further preferably 62% by mass or more and 90% by mass or less, for example, 66% by mass or more and 90% by mass or less. When the amount of water is 52% by mass or less, the emulsification of the oil and fat is insufficient, and hence an ice cream-like texture cannot be obtained but the composition is felt sticky in the mouth in some cases when the composition is frozen.

In the present invention, the term "cyclodextrin" means a cyclic non-reducing maltooligosaccharide having glucoside as a structural unit, and examples include α-cyclodextrin having six glucosides, β-cyclodextrin having seven glucosides, and γ-cyclodextrin having eight glucosides. In the present invention, each of, and an arbitrary combination of α-, β-, and γ-cyclodextrins can be used. Preferably, α-cyclodextrin is used. Since α-cyclodextrin has a high solubility in water, an ice cream-like aerated emulsion composition having less roughness when frozen can be obtained.

In the present invention, the term "water-soluble gelling agent" generally means a substance that is dissolved in water to impart viscosity (also designated as a thickening agent, a thickening stabilizer, a thickener, or the like in some cases). As such a water-soluble gelling agent, any of polysaccharide thickeners can be used, and examples include carboxymethylcellulose, glucomannan, tamarind gum, xanthan gum, ι carrageenan, locust bean gum, λ carrageenan, κ carrageenan, gellan gum, sodium alginate, and guar gum. Any one of these water-soluble gelling agents may be singly used, or a combination of different water-soluble gelling agents may be used. The water-soluble gelling agent is more preferably carboxymethylcellulose, glucomannan, tamarind gum, xanthan gum, ι carrageenan, locust bean gum, λ carrageenan, κ carrageenan, gellan gum, or sodium alginate, further preferably carboxymethylcellulose, glucomannan, xanthan gum, ι carrageenan, or locust bean gum, and particularly preferably carboxymethylcellulose, glucomannan, or xanthan gum.

When the cyclodextrin and the water-soluble gelling agent are used together, dispersibility of the oil and fat in the composition is increased to impart emulsification stability, and thus, when the composition is frozen, a soft and smooth good texture equivalent to or similar to that of a general ice cream can be imparted.

For example, the ice cream-like aerated emulsion composition of the present invention can contain the cyclodextrin in an amount of 0.1% by mass or more, preferably 0.5% by mass or more, for example, 0.6% by mass or more, 0.7% by mass or more, 0.8% by mass or more, or 0.9% by mass or more, more preferably 1% by mass or more, for example, 1.5% by mass or more, and further preferably 2% by mass or more, for example, 2.5% by mass or more. The upper limit of the amount of the cyclodextrin to be contained is not especially limited, and can be 5% by mass or less, for example, 4.5% by mass or less, 4% by mass or less, or 3.5% by mass or less, and preferably 3% by mass or less. The range of the cyclodextrin content in the ice cream-like aerated emulsion composition of the present invention can be expressed with two numerical values selected respectively from the upper and lower limit values described above. For example, the ice cream-like aerated emulsion composition of the present invention can contain the cyclodextrin in an amount appropriately selected from ranges of 0.1% by mass to 5% by mass, preferably 0.5% by mass to 3% by mass, and more preferably 1% by mass to 3% by mass. In addition, the ice cream-like aerated emulsion composition of the present invention can contain the water-soluble gelling agent in an amount of 0.01% by mass or more, preferably 0.05% by mass or more, and more preferably 0.1% by mass or more, for example, 0.15% by mass or more. The upper limit of the amount of the water-soluble gelling agent to be contained is not especially limited, and can be 5% by mass or less, preferably 2% by mass or less, more preferably 1% by mass or less, and further preferably 0.5% by mass or less, for example, 0.4% by mass or less, or 3.5% by mass or less. The range of the content of the water-soluble gelling agent in the ice cream-like aerated emulsion composition of the present invention can be expressed with two numerical values selected respectively from the upper and lower limit values described above. For example, the ice cream-like aerated emulsion composition of the present invention can contain the water-soluble gelling agent in an amount appropriately selected from ranges of 0.01% by mass to 5% by mass, preferably 0.01% by mass to 2% by mass, more preferably 0.05% by mass to 1% by mass, and further preferably 0.1% by mass to 0.5% by mass. When the amounts of the cyclodextrin and the water-soluble gelling agent are smaller than the above-described ranges, the emulsification stability of the composition may be insufficient in some cases, and on the contrary, when the amounts of the cyclodextrin and the water-soluble gelling agent are larger than the above-described ranges, the viscosity of the composition may be too high in some cases, and in either case, a soft and smooth good texture equivalent to or similar to that of a general ice cream cannot be obtained in some cases when the composition is frozen.

The ice cream-like aerated emulsion composition of the present invention can be substantially protein-free. A protein generally contains a hydrophobic amino acid residue and a hydrophilic amino acid residue, and hence has an emulsifying function due to the feature of its amphiphilicity. Therefore, a protein functions as an emulsifier in many of emulsified food. In a general ice cream, a protein contained in milk and an egg included in the raw materials exhibits this function. On the contrary, the composition of the present invention comprises the oil-in-water emulsion containing water, the oil and fat, the cyclodextrin, and the water-soluble gelling agent, and there is no need to use a protein functioning as an emulsifier. Accordingly, the term "substantially protein-free" means that the ice cream-like aerated emulsion composition of the present invention does not contain a protein in a form for exhibiting an emulsifying function, and does not always mean that no proteins are contained at all. Preferably, it means that a protein content derived from the specified ingredients (allergens) or the like is less than 10 μg per g of the ice cream-like aerated emulsion composition of the present invention, and more preferably, it means that the ice cream-like aerated emulsion composition of the present invention contains none of proteins corresponding to allergens such as an egg and milk (for example, one or more substances selected from 7 specified ingredients and 21 items equivalent to specified ingredients).

In the present invention, the amount of air contained in a three-dimensionally dispersed form in the ice cream-like aerated emulsion composition obtained by freezing (aeration rate) can be expressed as "overrun (%)". The overrun (%) of the ice cream-like aerated emulsion composition of the present invention can be calculated in accordance with the following expression based on a conventional method (Food Hygiene and Safety Science, Vol. 9, No. 5, p. 409-413, 1968; Milk Science, Vol. 59, No. 1, p. 37-47, 2010).

[Expression 1]

$$\text{Overrun (\%)} = \frac{[\text{Volume after stirring}]/[\text{Weight after stirring}] - [\text{Volume before stirring}]/[\text{Weight before stirring}]}{[\text{Volume before stirring}]/[\text{Weight before stirring}]} \times 100$$

Volume after stirring: A volume of a composition, which has been obtained by stirring various raw materials, put in a container with a prescribed volume to be levelled off.

Weight after stirring: A weight of the composition with the above-described volume after stirring.

Volume before stirring: A volume of the composition with the following weight before stirring.

Weight before stirring: A prescribed weight of a combination of the various raw materials before being stirred.

The overrun (%) of the ice cream-like aerated emulsion composition of the present invention is 13% or more, preferably 14% or more, more preferably 16% or more, further preferably 18% or more, particularly preferably 20% or more, and further particularly preferably 22% or more. When the ice cream-like aerated emulsion composition of the present invention has overrun (%) of 13% or more, a soft and smooth good texture equivalent to or similar to that of a general ice cream can be attained. On the contrary, when the overrun (%) of the composition is less than 13%, the composition becomes viscous as compared with a general ice cream, and a fluffy texture cannot be attained in some cases.

In the ice cream-like aerated emulsion composition of the present invention, other ingredients, such as a preservative, an antiseptic, an antioxidant, a colorant, a solvent, a solubilizing agent, an isotonic agent, a flavoring agent, a pH adjuster, a flavoring, a sweetener, a taste component, and an acidulant, usually used in production of food and drink, can be compounded if necessary in addition to the above-described ingredients. The amounts of these other ingredients to be compounded can be appropriately selected so as not to impair a good texture equivalent to or similar to that of a general ice cream desired in the present invention.

The ice cream-like aerated emulsion composition of the present invention can be produced by freezing an emulsion composition obtained by admixing and stirring water, the oil and fat, the cyclodextrin, and the water-soluble gelling agent, and the other ingredients if necessary. The respective ingredients may be admixed and stirred all at once, or the respective ingredients may be successively (in any order) added separately or in an arbitrary combination, to be admixed and stirred. The emulsion composition obtained by admixing and stirring can be subjected to heat sterilization or the like. The thus obtained ice cream-like aerated emulsion composition is filled in an appropriate container, and frozen at - 10°C to -30°C after freezing process at -3°C to -10°C (process of freezing moisture and mixing air) if necessary. Each freezing processes can be performed under stirring if necessary. The thus frozen emulsion composition can be stored and/or served at -3°C to -30°C.

The present invention also relates to a kit for producing the ice cream-like aerated emulsion composition of the present invention. The kit includes the oil and fat, the cyclodextrin, and the water-soluble gelling agent, and the other ingredients and water if necessary, and these can be held individually in different containers, or held in different containers in arbitrary combinations.

Each of the oil and fat, the cyclodextrin, the water-soluble gelling agent, and the other ingredients included in the kit may be in the form of a solid such as a powder or a granule (with an excipient or the like used if necessary), or in the form of a liquid such as an aqueous solution or a dispersion. Each of the respective ingredients is subjected to heat sterilization or the like before or after being held in a container in accordance with the form thereof to be used as a constituent element of the kit.

The kit can be used in accordance with the method for producing the ice cream-like aerated emulsion composition of the present invention described above, and water (if any of the elements of the kit is in the form of a liquid, water contained therein can be used), the oil and fat, the cyclodextrin, and the water-soluble gelling agent, and the other ingredients used if necessary are put in a container such as a bowl, the resultant is mixed and stirred with a mixer, a blender or the like, the thus obtained emulsion composition is filled in an appropriate container, and the resultant is frozen at -10°C to -30°C after the freezing process at - 3°C to -10°C if necessary, and thus, the ice cream-like aerated emulsion composition of the present invention can be obtained. Each freezing processes can be performed under stirring if necessary.

Now, the present invention will be described in more detail with reference to examples, and it is noted that the present invention is not limited to these examples.

Examples

1. Experimental Method

(1) Production of Ice Cream-like Aerated Emulsion Composition

Ice cream-like aerated emulsion compositions of Examples 1 to 5 and Comparative Examples 1 to 8 were produced in accordance with compositions shown in Table 1 below. The amount of each ingredient is shown in % by mass in the table. As the oil and fat, various edible vegetable oils and fats (coconut oil (palm oil), sunflower oil, canola oil, and rice oil) were used. The composition of Comparative Example 3 contained a protein (milk and an egg yolk) instead of the oil and fat, and corresponds to a general ice cream.

The raw materials were weighed in accordance with each composition to obtain a total weight of 100 g (weight before stirring), the resultant volume (volume before stirring) was measured with a graduated cylinder, the raw materials were admixed by stirring at 20,000 rpm (Polytron, type 3020/2, manufactured by KINEMATICA) for 10 minutes, and the resultant was frozen at -18°C for 10 hours to prepare the ice cream-like aerated emulsion composition.

The thus obtained ice cream-like aerated emulsion compositions of Examples 1 to 5 had a softness and smoothness similar to the general ice cream of Comparative Example 3. On the other hand, the ice cream-like aerated emulsion compositions of Comparative Examples 1, 2 and 4 to 8 were viscous and had a lack of a fluffy texture as compared with the ice cream-like aerated emulsion compositions of Examples 1 to 5 and the general ice cream of Comparative Example 3.

[Table 1]

| Raw Material | | Example 1 | Example 2 | Example 3 | Example 4 | Example 5 |
|---|---|---|---|---|---|---|
| Oil and fat | Coconut Oil | 20 | 10 | – | – | – |
| | Sunflower Oil | – | – | 20 | – | – |
| | Canola Oil | – | – | – | 20 | – |
| | Rice Oil | – | – | – | – | 20 |
| α-Cyclodextrin | | 1 | 1 | 1 | 1 | 1 |
| Carboxymethylcellulose | | 0.2 | 0.2 | 0.2 | 0.2 | 0.2 |
| Water | | 58.8 | 68.8 | 58.8 | 58.8 | 58.8 |
| Sugar | | 20 | 20 | 20 | 20 | 20 |
| Milk | | – | – | – | – | – |
| Egg Yolk | | – | – | – | – | – |
| Total | | 100 | 100 | 100 | 100 | 100 |

| Raw Material | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Oil and fat | Coconut Oil | 40 | 30 | – | 25 | 23 | – | – | – |
| | Sunflower Oil | – | – | – | – | – | 25 | – | – |
| | Canola Oil | – | – | – | – | – | – | 25 | – |
| | Rice Oil | – | – | – | – | – | – | – | 25 |
| α-Cyclodextrin | | 3 | 3 | – | 3 | 3 | 3 | 3 | 3 |
| Carboxymethylcellulose | | 0.2 | 0.2 | – | 0.2 | 0.2 | 0.2 | 0.2 | 0.2 |
| Water | | 36.8 | 44.8 | – | 49.8 | 51.8 | 49.8 | 49.8 | 49.8 |
| Sugar | | 20 | 22 | 20 | 22 | 22 | 22 | 22 | 22 |
| Milk | | – | – | 66 | – | – | – | – | – |
| Egg Yolk | | – | – | 14 | – | – | – | – | – |
| Total | | 100 | 100 | 100 | 100 | 100 | 100 | 100 | 100 |

(2) Measurement of Aeration Rate (Overrun (%)) of Ice Cream-like Aerated Emulsion Composition

Under -4°C condition, each of the thus obtained ice cream-like aerated emulsion compositions was transferred to a container with a volume of 52.21 mL (volume after stirring) and levelled off, and the resultant weight of the composition (weight after stirring) was measured.

Based on the weight before stirring, the volume before stirring, the weight after stirring, and the volume after stirring measured as described above, the overrun (%) was calculated in accordance with the above-described expression. The values of the weight before stirring and the volume before stirring of each composition, and the values of the weight after stirring and the volume after stirring of each ice cream-like aerated emulsion composition, and the value of each calculated overrun (%) are shown in Table 2 below.

[Table 2]

| | Before Stirring | | After Stirring | | Overrun (%) |
|---|---|---|---|---|---|
| | Weight (g) | Volume (ml) | Weight (g) | Volume (ml) | |
| Example 1 | 100 | 98 | 45. 81 | 52.21 | 16. 3 |
| Example 2 | 100 | 98 | 44. 92 | 52. 21 | 18. 6 |
| Example 3 | 100 | 98 | 45. 84 | 52. 21 | 16. 2 |
| Example 4 | 100 | 98 | 45. 32 | 52. 21 | 17. 6 |
| Example 5 | 100 | 98 | 45. 56 | 52. 21 | 16. 9 |
| Comparative Example 1 | 100 | 98 | 51. 62 | 52. 21 | 3. 2 |
| Comparative Example 2 | 100 | 98 | 49. 91 | 52. 21 | 6. 7 |
| Comparative Example 3 | 100 | 98 | 43. 25 | 52. 21 | 23. 2 |
| Comparative Example 4 | 100 | 98 | 48. 56 | 52. 21 | 9. 7 |
| Comparative Example 5 | 100 | 98 | 47. 29 | 52. 21 | 12. 7 |
| Comparative Example 6 | 100 | 98 | 49. 54 | 52. 21 | 7. 5 |
| Comparative Example 7 | 100 | 98 | 49. 34 | 52. 21 | 8. 0 |
| Comparative Example 8 | 100 | 98 | 49. 66 | 52. 21 | 7. 3 |

Figure 1 is a graph illustrating the relationship between the oil and fat content (% by mass) and the overrun (%) of the ice cream-like aerated emulsion compositions of Examples 1 to 5 and Comparative Examples 1, 2 and 4 to 8.
It was confirmed, based on this result, that the overrun (%) abruptly changes when the oil and fat content is in a range of 20 to 25% by mass in using any of the oils and fats, and it was revealed, based on inflection points present particularly in a range of 20 to 23% by mass, that the overrun (%) can be retained at a comparatively high value when the oil and fat content is set to less than 23% by mass.

(2) Effect of Use of Both Cyclodextrin and Water-soluble Gelling Agent

In accordance with compositions shown in Table 3 below, respective ingredients were admixed by stirring at 20,000 rpm for 10 minutes, and a state of oil droplets in each composition was observed with a microscope. The amount of each ingredient is shown in % by mass in the table.

[Table 3]

| 1% Oil Red-containing Oil and Fat | | | | |
|---|---|---|---|---|
| Canola Oil | 297 | | | |
| Oil Red | 3 | | | |
| Total | 300 | | | |
| | | | | |
| Raw Material | Example A | Comparative Example A | Comparative Example B | |
| 1% Oil Red-containing Oil and Fat | 20 | 20 | 20 | |
| $\alpha$ -Cyclodextrin | 2.3 | 2.3 | 0 | |
| Carboxymethylcellulose | 0.3 | 0 | 0.3 | |
| Water | 77.4 | 77.7 | 79.7 | |
| Total | 100 | 100 | 100 | |

Results of the observation of oil droplets in respective compositions are illustrated in Figure 2.

In the composition of Example A in which the cyclodextrin and the water-soluble gelling agent were both used, it was observed that oil droplets were present as finely dispersed in the entire composition (Figure 2(1)). When this composition was frozen, an ice cream-like aerated emulsion composition having softness and smoothness similar to those of a standard ice cream can be obtained.

On the other hand, in the composition of Comparative Example A that contained the cyclodextrin but did not contain the water-soluble gelling agent, it was observed that oil droplets were large as compared with those of Example A, and were present densely in one portion but sparsely in another portion, and thus were not dispersed uniformly (Figure 2(2)). When this composition was frozen, ice crystals included in the composition became large to cause a rough texture, and hence softness and smoothness similar to those of a standard ice cream could not be attained. Besides, since emulsification stability was low, it was observed that the composition was poor in shape retention when formed in a shape of a soft served ice cream, and soon melted.

In the composition of Comparative Example C that contained the water-soluble gelling agent but did not contain the cyclodextrin, it was observed that very large oil droplets were dispersed in the composition (Figure 2(3)). The composition of Comparative Example C did not contain the cyclodextrin, and hence was not emulsified strictly speaking but was slightly increased in the viscosity owing to the water-soluble gelling agent. When this composition was frozen, it was confirmed that ice crystals became rather large, and hence the composition had a gritty texture like a frozen sweet, and softness and smoothness similar to those of a standard ice cream could not be attained.

Based on these results, it was confirmed that when a water-soluble gelling agent and a cyclodextrin are both contained in a composition containing water and an oil and fat, the oil and fat can be finely and uniformly dispersed in the resultant composition, and that when the composition is frozen, an ice cream-like aerated emulsion composition having a soft and smooth texture unique to an ice cream can be obtained. The composition obtained by compounding a water-soluble gelling agent and a cyclodextrin in a composition containing water and an oil and fat is in a form obviously different from a form of a composition in which either of the water-soluble gelling agent and the cyclodextrin is compounded, and therefore, the effect attained by containing both the water-soluble gelling agent and the cyclodextrin could not be predicted from a composition in which either is singly compounded.

**Claims**

1. An ice cream-like aerated emulsion composition, comprising more than 52% by mass of water, less than 23% by mass of an oil and fat, a cyclodextrin, and a water-soluble gelling agent, and being substantially protein-free.

2. The composition according to claim 1, wherein the oil and fat is one or more selected from the group consisting of canola oil, rapeseed refined oil, soybean oil, corn oil, cottonseed oil, peanut oil, sesame oil, rice oil, rice bran oil, camellia oil, safflower oil, olive oil, linseed oil, Japanese basil oil, perilla oil, sunflower oil, coconut oil, palm oil, coconut oil, tea seed oil, avocado oil, kukui nut oil, grapeseed oil, cocoa butter, wheat germ oil, almond oil, evening primrose oil, castor oil, hazelnut oil, macadamia nut oil, rosehip oil, and grape oil.

3. The composition according to claim 1 or 2, wherein the cyclodextrin is $\alpha$-cyclodextrin.

4. The composition according to any one of claims 1 to 3, wherein the water-soluble gelling agent is one or more selected from the group consisting of carboxymethylcellulose, glucomannan, tamarind gum, xanthan gum, $\iota$ carrageenan, locust bean gum, $\lambda$ carrageenan, $\kappa$ carrageenan, gellan gum, alginate, and guar gum.

5. A method for producing an ice cream-like aerated emulsion composition, comprising a step of admixing more than 52% by mass of water, less than 23% by mass of an oil and fat, a cyclodextrin, and a water-soluble gelling agent, with substantially no protein contained.

6. A kit comprising an oil and fat, a cyclodextrin, and a water-soluble gelling agent for producing an ice cream-like aerated emulsion composition, wherein the composition contains water, the oil and fat, the cyclodextrin, and the water-soluble gelling agent, and is substantially protein-free.

FIG. 1

EP 4 101 306 A1

FIG. 2

**INTERNATIONAL SEARCH REPORT**

| International application No. |
| --- |
| PCT/JP2021/002931 |

A. CLASSIFICATION OF SUBJECT MATTER
A23D 7/00(2006.01)i; A23G 9/32(2006.01)i; A23G 9/34(2006.01)i; A23G
9/46(2006.01)i
FI: A23G9/32; A23G9/46; A23G9/34; A23D7/00 508
According to International Patent Classification (IPC) or to both national classification and IPC

B. FIELDS SEARCHED

Minimum documentation searched (classification system followed by classification symbols)
A23D7/00; A23G9/32; A23G9/34; A23G9/46

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2018-33420 A (INA FOOD INDUSTRY CO., LTD.) 08 March 2018 (2018-03-08) claims, paragraphs [0028], [0029], example 4 | 1-6 |
| A | WO 2005/084461 A1 (FUJI OIL CO., LTD.) 15 September 2005 (2005-09-15) example 11 | 1-6 |
| A | JP 2018-504131 A (CSM BAKERY SOLUTIONS EUROPE HOLDING B.V) 15 February 2018 (2018-02-15) claims, example 3, table 5 | 1-6 |

☐ Further documents are listed in the continuation of Box C.      ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 26 March 2021 (26.03.2021) | 06 April 2021 (06.04.2021) |

| Name and mailing address of the ISA/ Japan Patent Office 3-4-3, Kasumigaseki, Chiyoda-ku, Tokyo 100-8915, Japan | Authorized officer Telephone No. |
| --- | --- |

Form PCT/ISA/210 (second sheet) (January 2015)

INTERNATIONAL SEARCH REPORT
Information on patent family members

International application No.

PCT/JP2021/002931

| Patent Documents referred in the Report | Publication Date | Patent Family | Publication Date |
|---|---|---|---|
| JP 2018-33420 A | 08 Mar. 2018 | (Family: none) | |
| WO 2005/084461 A1 | 15 Sep. 2005 | US 2007/0148321 A1 example 11 CN 1929750 A TW 200529765 A | |
| JP 2018-504131 A | 15 Feb. 2018 | US 2016/0227807 A1 claims, example 3, table 5 AR 103652 A CA 2975080 A MX 2017009900 A | |

Form PCT/ISA/210 (patent family annex) (January 2015)

## REFERENCES CITED IN THE DESCRIPTION

### Patent documents cited in the description

- JP 2018504131 W
- JP 11253104 A
- JP 2020017715 A
- JP 2020139995 A

### Non-patent literature cited in the description

- *Food Hygiene and Safety Science,* 1968, vol. 9 (5), 409-413
- *Milk Science,* 2010, vol. 59 (1), 37-47